# EUROPEAN PATENT SPECIFICATION

(11) **EP 1 745 079 B1**
(45) Date of publication and mention of the grant of the patent: **22.01.2014**
(21) Application number: 05748350.5
(22) Date of filing: 11.05.2005
(51) Int. Cl.: C08C 19/36, C08F 8/32, C08F 279/02

(54) **METHOD FOR ADHERING FABRIC TO RUBBER, TREATED FABRIC, AND FABRIC-RUBBER COMPOSITES**
VERFAHREN ZUM KLEBEN VON GEWEBE AN KAUTSCHUK, BEHANDELTES GEWEBE UND KAUTSCHUK-GEWEBE VERBUNDEN
PROCEDE PERMETTANT DE FAIRE ADHERER UN TISSU A DU CAOUTCHOUC, TISSU TRAITE ET COMPOSITES TISSU-CAOUTCHOUC

(30) Priority: 14.05.2004 US 571056 P
(43) Date of publication of application: 24.01.2007
(73) Proprietor: Cray Valley USA, LLC, Exton, PA 19341 (US)
(72) Inventor: KLANG, Jeffrey, A., Westchester, PA 19382 (US); BURKE, Joseph, S., Moon Township, PA 15108 (US)
(74) Representative: Stolmár, Matthias
(86) International application number: PCT/EP2005/005075
(87) International publication number: WO 2005/113609

(56) References cited:
- US-A- 4 009 228
- US-A- 4 137 282
- US-A1- 2004 002 562

## Description

This invention relates to compositions, preferably adhesive compositions, comprising maleinized imide polymer, more particularly adhesive compositions for bonding rubber to fabric and reinforcing rubber compounds with fabric, methods for treating fabric to enhance adhesion to rubber, reinforced rubber articles and related uses of these compositions.

Reinforced rubber goods are used in a wide variety of consumer and industrial applications. The performance of reinforced molded rubber goods depends on the adhesion of the reinforcement to the rubber. Fabrics made with synthetic yarns tend to be difficult to bond to rubber. In practice, several things are done to improve adhesion. As the fibers are drawn a spin finish is applied which may contain an adhesion activator such as an epoxy resin. The yarn may be heat set before or after weaving to relax the orientation put into the fiber by drawing and avoid shrinkage during the rubber bonding curing step. Shrinkage during this step will adversely effect adhesion. Finally, to get good bonding to rubber, an adhesive dip coat is applied to the fabric.

A typical dip coat process to apply the adhesive may involve many steps and is tailored to each application, i.e., a different adhesive may be used depending on the fabric type and the rubber it is to be molded with. Some of the steps may include a pretreatment dip of the fabric with a polyisocyanate dissolved in a solvent. The fabric is then dried and put through a forced air oven to cure the coating and heat set the fabric. This operation may be followed by a subsequent dip treatment in a resin-reinforced latex (RFL) bath, and a second trip through the oven. The composition of these baths may include the addition of other adhesive promoters such as epoxies, phenolics or the like. An RFL bath is made by preparing a 6% resin solution of resorcinol and formaldehyde or other methylene donor in water. This solution is allowed to react for a certain time at a specified pH and temperature and is then poured into a rubber latex and the blend is again allowed a certain time to "mature" before using. U. S. Patent 3,307,966 assigned to E.I. DuPont describes such a process.

In practice, these types of RFL dip adhesives have several drawbacks, including the following. The shelf life of the adhesive composition depends on several factors including pH, temperature and the exact ingredients and is difficult to control. Typical shelf life can vary from one day to one month after which the material must be disposed of. It is also difficult to test whether or not the adhesive has drifted out of its useful property range.

Batch to batch variation is also a problem. Environmental and safety issues are a concern. The adhesives are dried and cured at high temperature (up to 200°C). In addition to the high energy usage, there are emissions of solvents, formaldehyde and other materials. Finally, performance of the adhesive in the end use application is often inadequate. The goal is to have cohesive failure of the rubber matrix rather than adhesive failure at the rubber-fabric interface with the RFL adhesives. This is often only achievable by addition of other additives to the rubber.

We have discovered certain materials and methods for treatment of fabric to improve fabric to rubber adhesion while avoiding the drawbacks of the prior art mentioned above. In one aspect, the invention relates to a composition, preferably an adhesive composition comprising at least one maleinized imide polymer to the fabric, the polymer being selected from the group consisting of butadiene homopolymer, butadiene copolymers, isoprene homopolymer, isoprene copolymers and poly(maleimide-co-alkenyl benzenes) and at least one metal salt of an α,β-ethylenically unsaturated carboxylic acid, more particularly an adhesive composition to treat the fabric. In other aspects, the invention applies to the rubber-fabric composites made using the materials and methods of the invention and specific end-uses of the said compositions.

The first subject of the present invention concerns a composition, preferably an adhesive composition, comprising at least one maleinized imide polymer as defined above, more particularly as an imide salt, and at least one metal salt of an α,β-ethylenically unsaturated carboxylic acid. The said composition may be in the form of a solution in organic solvent or in water or combinations thereof. The maleinized imide polymer can be applied to the fabric either neat or from solution. Either organic solvent or water based solutions can be used. Water based solutions are preferred.

Preferably, a water solution of the maleinized imide polymer is formed by neutralizing the basic nitrogen present in the system with an acid and this solution is used in the treatment process. At least one metal salt of an α,β-ethylenically unsaturated carboxylic acid is used in conjunction with the above solution. Additives such as surfactants may also be included as needed. The concentration of the soluble imide salt can range from about 1% to about 90% and preferably from about 10% to about 50%. The concentration of the soluble metal salt can independently cover the same ranges, i.e, from 0 to about 90%, preferably from about 1 to 90% and more preferably from about 10 to 50% by weight based on the solution. The compositions of the invention comprising a solution of a maleinized imide polymer and a metal salt of an α,β-ethylenically unsaturated carboxylic acid can be prepared by blending an aqueous solution of at least one said imide with an aqueous solution of at least one said metal salt. The said imide solution preferably further comprises an acid which functions to neutralize the said imide. So, preferably the said imide is in the form of an acid/base salt in an aqueous solution which may contain the said metal salt. The said acid is of sufficient strength to protonate the basic sites (nitrogens) in the maleinized imide resin (polymer) and can be strong or weak and organic or inorganic in nature. Examples include, but are not limited to, hydrochloric acid, sulfuric acid, phosphoric acid, alkyl or aryl sulfonic acids, carbonic acid or carboxylic acids selected from the group consisting of formic acid, acetic acid, propionic acid, benzoic acid, acrylic acid, methacrylic acid, citric acid, oxalic acid and lactic acid. Among preferred acids is acetic acid providing acetate salts of imide. In the said composition according to the invention, the weight ratio of said imide polymer to the said metal salt may range from 1:99 to 99:1, preferably from 80:20 to 40:60.

Application of the adhesive to the fabric can be done by any of the usual methods for doing such treatments including dip coating, spray application or roller application.

The maleinized imide polymers of the invention are made by reaction of a maleinized resin (polymer) with a primary/tertiary amine using known methods. The molecular weight, microstructure and maleic anhydride content of the maleinized resin (polymer) can be optimized by routine methods. The number average molecular weight of the maleinized resin (polymer) is preferably less than about 20,000 Daltons and more preferably from about 1000 to about 10,000 Daltons. The resin (polymer) can be a polybutadiene and/or a butadiene homopolymer, a butadiene copolymer, an isoprene homopolymer, an isoprene copolymere, or a poly(maleic anhydride copolymer-co-alkenyl benzene) resin such as styrene-maleic anhydride copolymer (SMA). The butadiene polymer and copolymers can have 1,2- to 1,4- butadiene units in a ratio of about 1:99 to about 95:1 and the ratio of cis to trans 1,4-butadiene units from 100:1 to 1:100. The maleic anhydride content in the resin (polymer) can range from about 1 to about 50 wt % and more preferably from about 5 to about 30 wt %. Co-polymers of butadiene and isoprene with one or more other monomers, for example, styrene, substituted styrene, vinyl cyclohexene, acrylate and methacrylate esters, dicyclopentadiene, norborene and the like can be maleinized and imidized. Copolymers of butadiene with substituted dienes such as isoprene are also suitable in the maleinized resin (polymer).

The amine used to make the imide consists of a material containing one primary amine group capable of forming a cyclic imide and one or more tertiary amine groups and is referred to herein as "primary/tertiary amine". The primary/tertiary amine may be aliphatic, cycloaliphatic or aromatic in nature. Other functional groups can be present on the primary/tertiary amine to the extent that they do not interfere with the formation of the cyclic imide or its solubility in water. Examples of suitable primary/tertiary amines include, but are not limited to : N,N-dimethylaminopropyl amine, aminopropylmorpholine, N,N-dibutylaminopropyl amine, N,N-diisopropylaminoethyl amine, N,N-diethylaminopropyl amine and N,N-dimethylaminoethyl amine.

The composition includes a metallic salt of an α,β-ethylenically unsaturated carboxylic acid. The α,β-ethylenically unsaturated carboxylic preferably consists of methacrylic acid or acrylic acid or crotonic acid, or tiglic acid, or cinnamic acid, or combinations thereof. The metallic counterion can consist of a mono-, di-, tri-, tetra- or higher valent ion. Examples include, but are not limited to : lithium, sodium, potassium, calcium, zinc, magnesium, barium, berylium, aluminum, titanium, zirconium, iron, copper and silver, or combinations thereof.

The said metal salt is preferably zinc diacrylate.

The composition is preferably in the form of an aqueous solution which further comprises acetic acid.

Another subject of the invention concerns a method for treating a fabric to enhance adhesion to rubber comprising applying to the fabric an adhesive composition as defined above according to the invention, The said composition may be applied by spraying, dip coating, extrusion or roller coating. The fabric to treat may be heated at a temperature of up to about 240°C.

Synthetic or natural fiber fabrics can be treated. Synthetic fabrics such as polyester, polyamide, polyurethane, nylon, polypropylene, carbon fibers, metallic fibers and fiberglass are all suitable. Fabrics based on natural fibers such as cotton, rayon, silk or wool are also suitable as are fabrics made from blends of two or more types of fibers.

Another subject of the invention relates to fabrics treated with an adhesive composition according to the invention. The said fabric may be laminated and molded with rubber and cured to obtain a reinforced rubber article.

The type of rubber used is not critical and can include natural or synthetic rubbers including but not limited to EPDM (ethylene propylene diene rubber), EPM (ethylene propylene rubber), BR (butadiene rubber), IR (isoprene rubber), NBR (nitrile rubber), HNBR (hydrogenated nitrile rubber), SBR (styrene butadiene rubber), CR (chloropene rubber), XIIR (halobutyl rubber), UR (urethane rubber) and blends and copolymers of these materials. Free radical initiator, preferably peroxides, or sulfur curatives may be used for the cure of rubber.

The reinforced rubber goods made by the use of the adhesive composition and/or the methods of the invention can be used in a variety of end-use applications, including, but not limited to, automotive hoses and belts, conveyor belts, power transmission belts, automotive air bags, flexible printing blankets, engine mounts, tires and any other reinforced molded rubber products.

Other possible applications and uses of the composition of the invention outside of the area of fabric to rubber adhesion include the treatment of fiberglass or carbon fiber reinforcements to improve the properties of composite structures and use as an adhesive for bonding of substrates such as metal, plastic, wood, paper, glass or fabrics to themselves or other materials.

Additional uses of the compositions of the present invention may be in non-adhesive applications such as dispersants to improve dispersion (homogeneity) and compatibility of fillers into elastomers, the filled elastomers being used to produce tires, belts, hoses or other articles ; coatings for metals, plastics, glass, wood, paper or other substrates. Such coatings can be applied from water-borne or solvent-borne solution composition or by electrophoretic deposition.

Another subject of the invention relates to dispersants for fillers into elastomers, comprising at least one composition as defined according to the invention.

The following examples, in which all parts are by weight, unless otherwise specified, illustrate a few, non-limiting, embodiments of the invention.

### Examples

### Example 1 : Preparation of a maleinized polybutadiene imide

A 1 liter flask fitted with a mechanical stirrer, thermocouple and nitrogen sparge tube was charged with a maleinized polybutadiene resin (Ricon 131MA17 available from Sartomer Company) (368.7 g), xylenes (385.2 g) and N,N-dimethylaminopropyl amine (71.6 g). The mixture was heated to reflux to remove water. Once water production stopped, the xylene was distilled off and the temperature was allowed to rise to 160°C and held until no more volatiles were collected. The final product had an acid value of 2 mg KOH/g and viscosity at 60°C of 6200 mPa.s (cP).

### Example 2: Preparation of Adhesive Solution, 15% active in water

A solution was prepared with ingredients set forth below in Table 1.

**Table 1**

| Ingredients | Dry Weight | Wet Weight |
|---|---|---|
| Deionized water | 0 | 557 |
| Maleinized polybutadiene imide of Ex. 1 | 100 | 100 |
| Glacial Acetic Acid | 0 | 9.7 |
| Totals | 100 | 667 |

The deionized water and acetic acid were added to a quart paint can, placed on a hot plate and warmed to about 60°C. The maleinized polybutadiene imide was added slowly while stirring. Stirring was continued while the temperature was held at about 60°C. The solution was complete in about 4 hours.

### Example 3 : Coating of fibers

The maleinized polybutadiene imide acetate solution was used to coat nylon, polyester and aramid woven fabrics. Samples of polyester, and nylon woven fabrics, 0.305 kg/m² (9 oz/yd²) were roller coated with the solution and allowed to dry in a hood at room temperature. The fabrics were then hooked onto a stretch frame and cured in an air oven at 200°C for 90 seconds. After cooling, the weight of the adhesive on the fabric was calculated as a weight gain measured from the uncoated weight of the fabric. An aramid woven tape, 5,08 cm (2 inches) wide was also treated in the same way. The % of weight gain is reported below in table 2.

**Table 2**

| Fabric | % weight gain |
|---|---|
| Polyester | 6.2 |
| Nylon | 9.9 |
| Aramid | 6.6 |

### Example 4 : Preparation of EPDM Masterbatch

An EPDM molding compound was prepared as follows. The first 5 items as cited in table 3 were mixed into a "masterbatch". The peroxide was added on a two roll mill.

**Table 3 : EPDM Molding Compound**

| Ingredients | Weight in g |
|---|---|
| EPDM* | 100 |
| Carbon Black, N 660 | 100 |
| Aliphatic oil, Sunpar 2280 | 50 |
| Zinc Oxide | 5 |
| Stearic Acid | 1 |
| Dicumyl peroxide, Luperox DC40-KEP | 7.5 |

| | |
|---|---|
| * amorphorus ethylene (55%)-propylene (40%)-ethylidene norbornene (5%) terpolymer, Nordel IP 4640 brand. | |

### Example 5 : Preparation of testing of EPDM rubber fabric composites

T-Peel adhesion test specimens were prepared as follows. The EPDM rubber compound was sheeted on a two roll mill to about 0.76 mm (0.030 inches) thick. Three strips were cut from the sheet, about 4.45 cm (1.75 inches) wide by 10.16 cm (4 inches long). These were interleaved with two strips if the treated fabric, 5.08 cm (2 inches) wide by 12.7 cm (5 inches) long. About 2.54 cm (1 inch) of one end of the fabric was not covered with rubber. An aluminum foil strip was placed in this area to prevent rubber from bonding to the fabric. This area was later used to peel and place the separate parts of the composite in opposite ends of a tensile testing machine. The composites were molded in a heated platen press for 40 minutes at 160°C (320°F).

After molding the samples were allowed to cool and relax for one day and then tested for adhesive strength. A 2.54 cm (one inch) wide strip was die cut from each sample. The separated ends of the samples were placed in a tensile testing machine and pulled apart at 12.7 cm/min (5 in/min). The force to pull the composite apart was recorded. The results are summarized in the table below. The "force" is that required to pull the 2.54 cm (one inch) wide sample apart ; the "% cohesive failure" is the percentage of the area in which the rubber tore and left approximately even thicknesses of rubber bonded to the two fabric strips. The T-Peel adhesion results are reported below in Table 4.

**Table 4 : T-Peel Adhesion Results**

| Treated Fabric | Polyester | Nylon | Aramid |
|---|---|---|---|
| Force, kN/m (lb/in) | 3.5 (20) | 0.8 (5) | 3.0 (17) |
| % Cohesive Failure | 0 | 0 | 0 |

### Example 6 : Preparation of Zinc Diacrylate (ZDA)-Acetate solution blends, treated fabrics and adhesion testing thereof

The procedures described in Example 2 were followed. The treating solutions were increased in concentration to 20% active. Ingredients for maleinized polybutadiene imide solution are reported below in Table 5 and for metal salt solution in Table 6.

**Table 5 : imide solution**

| Ingredients | Dry Weight | Wet Weight |
|---|---|---|
| Deionized water | 0 | 390.3 |
| Maleinized polybutadiene imide of Ex. 1 | 100 | 100 |
| Glacial Acetic Acid | 0 | 9.7 |
| Totals | 100 | 500 |

**Table 6 : metal salt solution**

| Ingredients | Dry Weight | Wet Weight |
|---|---|---|
| Deionized water | 0 | 200 |
| Zinc diacrylate | 50 | 50 |
| Totals | 50 | 250 |

The solution was filtered to remove the residual zinc oxide.

Blends of these two solutions were made at varying ratios, with the amounts of ZDA reported below in Table 7. The variation was in the amount of the zinc diacrylate solution in the blend. Both polyester and nylon woven fabrics were treated, cured, molded and tested in the manner described in Example 2. The results are reported below in Table 7. The weight of adhesive on each of these specimens was between 4.4% - 5.5% and on average of 5% by weight.

**Table 7 : T-Peel Adhesion Results**

| % Zinc Diacrylate in the adhesive | Polyester | | Nylon | |
|---|---|---|---|---|
| | Force, kN/m (lb/in) | % cohesive | Force, kN/m (lb/in) | % cohesive |
| 0* | 3.33 (19) | 0 | 0.53 (3) | 0 |
| 10 | 3.85 (22) | 0 | 1.75 (10) | 0 |
| 20 | 4.73 (27) | 0 | 3.50 (20) | 0 |
| 30 | 4.73 (27) | 0 | 1.23 (7) | 0 |
| 40 | 6.13 (35) | 40 | 4.20 (24) | 0 |
| 50 | 8.23 (47) | 80 | 2.28 (13) | 0 |

| | | | | |
|---|---|---|---|---|
| *comparative | | | | |

### Example 7 : Adhesion composition added to EPDM Rubber and composites with Polyester and Nylon fibers

The procedures described in Example 5 were followed. The treating solution was the maleinized polybutadiene imide prepared in Example 1 with an acetate solution at 20% active. In these experiments, adhesion promoters were added to the EPDM rubber compound. A first promoter is a polybutadiene resin with 17% by weight of adducted maleic anhydride (Ricobond 1731 brand). A second adhesion promoter is a dispersion of zinc diacrylate in EPM rubber at about 75% (SR 75EPM 2A brand). Each of these adhesion promoters was added to the rubber compound on the two roll mill at 7 active phr (parts per hundred of rubber). A compound with no adhesion promoter was also tested.

T-Peel Adhesion are reported in Table 8 below.

**Table 8 : T-Peel Adhesion Results**

| Adhesion Promoter | Polyester | | Nylon | |
|---|---|---|---|---|
| | Force, kN/m (lb/in) | % Cohesive Failure | Force, kN/m (lb/in) | % Cohesive Failure |
| None * | 3.68 (21) | 10 | 0.88 (5) | 0 |
| Ricobond 1731 | 6.13 (35) | 40 | 5.60 (32) | 50 |
| SR 75 EPM 2A | 6.13 (35) | 50 | 6.48 (37) | 100 |

| | | | | |
|---|---|---|---|---|
| *comparative | | | | |

### Example 8 : Imide-ZDA adhesive solution and Rubber Fabric Composite

The procedures as in Example 6 were followed. A combination of treating solutions was used : NTX 6715 acetate and zinc diacrylate both at 20% active. The zinc diacrylate was 25% in the blend of adhesive solutions. And as in Example 6, the same adhesion promoters were added to the EPDM rubber compound. T-Peel Adhesion results are reported below in Table 9.

**Table 9 : T-Peel Adhesion Results**

| Adhesion Promoter | Polyester | | Nylon | |
|---|---|---|---|---|
| | Force, kN/m (lb/in) | % Cohesive Failure | Force, kN/m (lb/in) | % Cohesive Failure |
| None * | 7.70 (44) | 100 | 6.13 (35) | 60 |
| Ricobond 1731 | 5.95 (34) | 15 | 6.83 (39) | 100 |
| SR 75 EPM 2A | 6.48 (37) | 100 | 6.48 (37) | 100 |

| | | | | |
|---|---|---|---|---|
| *comparative | | | | |

These results demonstrate that the polybutadiene imide acetate solution, optionally blended with a zinc diacrylate solution, is a very good treatment for fabrics to be bonded to rubber. The treated fabrics are further improved by the addition of adhesion promoters in the rubber.

### Example 9 : UV Cured Acetate-ZDA

The maleinized polybutadiene imide, acetate/zinc diacrylate solution blend of Example 8 was modified for UV curing instead of the thermal curing in the previous examples. There was 25% zinc diacrylate in the adhesive blend. Into 50 g of the 20% NTX 6715 acetate/zinc diacrylate solution blend 0.78 g of KIP-EM photoinitiator was blended. This is roughly 1.5% wet on wet. Uncoated polyester and nylon fabrics were heat set for 90 seconds at 200°C. These were then coated with the UV modified adhesive solution. The fabrics were then UV cured in the ASHDEE unit with 2 lamps at 118 W/cm (300 watts/in) at 15.2 m/min (50 ft/min). There were 2 passes on both front and back of the fabrics. The pick up weights of the adhesive were : Polyester 10.6% and Nylon 11.3%. The heated fabrics were then molded with EPDM compounds as in the previous Examples and tested for adhesion, with results reported below in Table 10.

**Table 10 : T-Peel Adhesion Results**

| Adhesion Promoter | Polyester | | Nylon | |
|---|---|---|---|---|
| | Force, kN/m (lb/in) | % Cohesive Failure | Force, kN/m (lb/in) | % Cohesive Failure |
| None* | 3.50 (20) | 0 | 4.90 (28) | 30-40 |
| Ricobond 1731 | 4.03 (23) | 0 | 7.36 (42) | 70-80 |
| SR 75 EPM 2A | 2.63 (15) | 0 | 6.13 (35) | 50-60 |

| | | | | |
|---|---|---|---|---|
| *comparative | | | | |

While the invention has been described and illustrated in detail herein, various modifications, alternatives, improvements and alterations should be readily apparent to those skilled in this art without departing from the spirit and scope of the invention.

## Claims

1. A composition comprising at least one maleinized imide polymer and at least one metal salt of an α,β-ethylenically unsaturated carboxylic acid, the said polymer being selected from the group consisting of butadiene homopolymer, butadiene copolymers, isoprene homopolymer, isoprene copolymers, and poly(maleic anhydride-co-alkenyl benzenes).

2. The composition of Claim 1 where it is in the form of a solutions in organic solvent or in water or combinations thereof.

3. The composition of Claims 1 or 2 where the maleinized imide polymer is in the form of an acid/base salt in an aqueous solution that optionally also contains a metal salt of an α,β-ethylenically unsaturated carboxylic acid.

4. The composition of Claim 3 where the salt is prepared by addition of an acid of sufficient strength to protonate the basic sites in the maleinized imide polymer.

5. The composition of Claim 4 where the acid consists of hydrochloric acid, sulfuric acid, phosphoric acid, alkyl or aryl sulfonic acids, carbonic acid or carboxylic acids selected from the group consisting of formic acid, acetic acid, propionic acid, benzoic acid, acrylic acid, methacrylic acid, citric acid, oxalic acid and lactic acid.

6. The composition of any one of Claims 1 to 5 where the α,β-ethylenically unsaturated carboxylic acid metal salt consists of a salt of acrylic, methacrylic, crotonic, tiglic or cinnamic acids or combinations thereof and the metal is selected from the group consisting of lithium, sodium, potassium, calcium, zinc, magnesium, barium, berylium, aluminum, titanium, zirconium, iron, copper or silver or combinations thereof.

7. The composition according to any one of Claims 1 to 6, where in the said metal salt is zinc diacrylate

8. The composition according to any one of Claims 1 to 7, wherein the said composition is in the form of an aqueous solution which futher comprises acetic acid

9. Use of a composition according to any one of Claims 1 to 8 for treating a fabric to enhance adhesion to rubber.

10. A method for treating a fabric to enhance adhesion to rubber comprising applying to the fabric a composition as defined according to any one of Claims 1 to 8.

11. The method of Claim 10 where the adhesive composition is applied to the fabric by spraying, dip coating, extrusion or roller coating.

12. The method of Claims 10 or 11 where the treated fabric is heat treated at a temperature of up to about 240°C.

13. The method of any one of Claims 10 to 12 where the fabric consists of polyester, polyamide, polyurethane, cotton, rayon, silk, wool, nylon, polypropylene, fiberglass, carbon fibers, metallic fibers or blends thereof.

14. Fabric treated with a composition defined according to claims 1 to 8 or according to the method defined according to any one of claims 10 to 13

15. A reinforced rubber article, wherein the treated fabric of Claim 14 is laminated and molded with rubber and cured.

16. The rubber article of Claim 15 where the rubber is selected from the group consisting of natural or synthetic rubbers, EPDM (ethylene propylene diene rubber), EPM (ethylene propylene rubber), BR (butadiene rubber), IR (isoprene rubber), NBR (nitale rubber), HNBR (hydrogenated nitrile rubber), SBR (styrene butadiene rubber), CR (chloropene rubber), XDR (halobutyl rubber), UR (urethane rubber) and blends and copolymers of these materials.

17. The rubber article of Claims 15 at 16 where the rubber is cured by free radical initiator or sulfur curatives.

18. The rubber article of claim 17 where the rubber is cured by peroxide.

19. Use of a composition according to any one of Claims 1 to 8 in preparing reinforced rubber articles according to any one of Claims 15 to 18 for end-use applications comprising : automotive hoses and belts, conveyor belts, power transmission belts, automotive air bags, flexible printing blankets, engine mounts, tires and any other reinforced molded rubber products.

20. Use of a composition according to any one of Claims 1 to 8 in the treatment of fiberglass or carbon fiber reinforcements to improve the properties of composite structures.

21. Use of a composition according to any one of claims 1 to 8 as an adhesive for bonding of substrates selected from metal, plastic, wood, paper, glass or fabrics to themselves or other materials.

22. Use of a composition according to any one of Claims 1 to 8, as dispersants of fillers into elastomers, or as coatings for metals, plastics, glass, wood, paper or other substrates.

23. Dispersant for fillers into elastomers, comprising at least one composition as defined according to any one of Claims 1 to 8.

## Patentansprüche

1. Zusammensetzung, umfassend wenigstens ein Maleinimidpolymer und wenigstens ein Metallsalz einer α,β-ethylenisch ungesättigten Carbonsäure, wobei das Polymer ausgewählt ist aus der Gruppe, bestehend aus Butadienhomopolymer, Butadiencopolymeren, Isoprenhomopolymer, Isoprencopolymeren und Poly(maleinsäureanhydrid-co-alkenylbenzole).

2. Zusammensetzung nach Anspruch 1, wobei sie in Form einer Lösung in einem organischen Lösungsmittel oder in Wasser oder Kombinationen davon vorliegt.

3. Zusammensetzung nach Anspruch 1 oder 2, wobei das Maleinimidpolymer in Form eines sauren/basischen Salzes in einer wässrigen Lösung, die gegebenenfalls ebenfalls ein Metallsalz einer α,β-ethylenisch ungesättigten Carbonsäure enthält, vorliegt.

4. Zusammensetzung nach Anspruch 3, wobei das Salz durch Zugeben einer Säure hergestellt wird, deren Stärke zur Protonierung der basischen Stellen in dem Maleinimidpolymer ausreicht.

5. Zusammensetzung nach Anspruch 4, wobei die Säure sich aus Salzsäure, Schwefelsäure, Phosphorsäure, Alkyl- oder Arylsulfonsäure, Kohlensäure oder eine Carbonsäure, ausgewählt aus der Gruppe, bestehend aus Ameisensäure, Essigsäure, Propionsäure, Benzoesäure, Acrylsäure, Methacrylsäure, Zitronensäure, Oxalsäure und Milchsäure zusammensetzt.

6. Zusammensetzung nach einem der Ansprüche 1 bis 5, wobei das Metallsalz der α,β-ethylenisch ungesättigten Carbonsäure aus einem Acrylsäure- Methacrylsäure, Crotonsäure-, Tiglinsäure oder Zimtsäuresalz oder Kombinationen davon besteht und das Metall ausgewählt ist aus der Gruppe, bestehend aus Lithim, Natrium, Kalium, Calcium, Zink, Magnesium, Barium, Beryllium, Aluminium, Titan, Zirkonium, Eisen, Kupfer oder Silber oder Kombinationen davon.

7. Zusammensetzung nach einem der Ansprüche 1 bis 6, wobei das Metallsalz Zinkdiacrylat ist.

8. Zusammensetzung nach einem der Ansprüche 1 bis 7, wobei die Zusammensetzung in Form einer wässrigen Lösung vorliegt, die weiterhin Essigsäure umfasst.

9. Verwendung einer Zusammensetzung nach einem der Ansprüche 1 bis 8 zum Behandeln eines Gewebes zur Verbesserung der Haftung an Gummi.

10. Verfahren zum Behandeln eines Gewebes zur Verbesserung der Haftung an Gummi, umfassend das Aufbringen einer Zusammensetzung, wie sie gemäß einem der Ansprüche 1 bis 8 definiert ist, auf das Gewebe.

11. Verfahren nach Anspruch 10, wobei die Klebstoffzusammensetzung auf das Gewebe durch Sprühen, Tauchbeschichten, Extrusion oder Walzenauftrag aufgebracht werden kann.

12. Verfahren nach Anspruch 10 oder 11, wobei das behandelte Gewebe bei einer Temperatur von bis zu ungefähr 240 °C wärmebehandelt wird.

13. Verfahren nach einem der Ansprüche 10 bis 12, wobei das Gewebe aus Polyester, Polyamid, Polyurethan, Baumwolle, Viskose, Seide, Wolle, Nylon, Polypropylen, Glasfaser, Kohlefasern, metallischen Fasern oder Mischungen davon besteht.

14. Gewebe, das mit einer Zusammensetzung, die gemäß den Ansprüchen 1 bis 8 definiert ist, oder entsprechend dem Verfahren, wie es gemäß einem der Ansprüche 10 bis 13 definiert ist, behandelt ist.

15. Kautschukverstärktes Erzeugnis, wobei das behandelte Gewebe nach Anspruch 14 mit Kautschuk laminiert, geformt und gehärtet wird.

16. Kautschukgegestand nach Anspruch 15, wobei der Kautschuk ausgewählt ist aus der Gruppe, bestehend aus natürlichem oder synthetischem Kautschuk, EPDM (Ethylenpropylendienkautschuk), EPM (Ethylenpropylenkautschuk), BR (Butadienkautschuk), IR (Isoprenkautschuk), NBR (Nitrilkautschuk), HNBR (hydrierter Nitrilkautschuk), SBR (Styrolbutadienkautschuk), CR (Chloroprenkautschuk), XIIR (Halobutylkautschuk), UR (Urethankautschuk) und Mischungen und Copolymeren aus diesen Materialien.

17. Kautschukgegenstand nach Anspruch 15 oder 16, wobei der Kautschuk mittels eines freie Radikale bildenden Initiators oder eines Schwefelhärtemittels gehärtet wird.

18. Kautschukgegenstand nach Anspruch 17, wobei der Kautschuk mittels Peroxid gehärtet wird.

19. Verwendung einer Zusammensetzung nach einem der Ansprüche 1 bis 8 zur Herstellung verstärkter Kautschukgegenstände gemäß einem der Ansprüche 15 bis 18 zur Endverwendung umfassend, Schläuche und Riemen im Automobilbereich, Förderbänder, Riemen zur Kraftübertragung, Airbags für Kraftfahrzeuge, flexible Drucktücher, Motorlager, Reifen und viele weitere verstärkte Kautschukformteile.

20. Verwendung einer Zusammensetzung nach einem der Ansprüche 1 bis 8 bei der Behandlung von Glasfaser- oder Kohlefaserverstärkungen zur Verbesserung der Eigenschaften von Verbundstrukturen.

21. Verwendung einer Zusammensetzung gemäß einem der Ansprüche 1 bis 8 als Klebstoff zum Verbinden von Substraten, ausgewählt aus Metall, Kunststoff, Holz, Papier, Glas oder Geweben, miteinander oder mit anderen Materialien.

22. Verwendung einer Zusammensetzung nach einem der Ansprüche 1 bis 8 als Dispergiermittel für Füllstoffe in Elastomeren oder als Beschichtungen für Metalle, Kunststoffe, Glas, Holz, Papier oder andere Substrate.

23. Dispergiermittel für Füllstoffe in Elastomeren, umfassend wenigstens eine Zusammensetzung, wie sie gemäß einem der Ansprüche 1 bis 8 definiert ist.

## Revendications

1. Composition comprenant au moins un polymère d'imide maléinisé et au moins un sel métallique d'un acide carboxylique à insaturation α,β-éthylénique, ledit polymère étant sélectionné parmi le groupe constitué d'un homopolymère de butadiène, de copolymères de butadiène, d'un homopolymère d'isoprène, de copolymères d'isoprène et de poly(maléique anhydride-co-alkényl benzènes).

2. Composition selon la revendication 1, où elle est sous la forme d'une solution dans un solvant organique ou dans de l'eau ou des combinaisons de ceux-ci.

3. Composition selon la revendication 1 ou 2, où le polymère d'imide maléinisé est sous la forme d'un sel acide/base dans une solution aqueuse qui contient également en option un sel métallique d'un acide carboxylique à insaturation α,β-éthylénique.

4. Composition selon la revendication 3, où le sel est préparé par addition d'un acide de force suffisante pour protoner les sites basiques du polymère d'imide maléinisé.

5. Composition selon la revendication 4, où l'acide est constitué d'acide chlorhydrique, d'acide sulfurique, d'acide phosphorique, d'acides alkyl- ou arylsulfoniques, d'acide carbonique ou d'acides carboxyliques provenant du groupe constitué de l'acide formique, l'acide acétique, l'acide propionique, l'acide benzoïque, l'acide acrylique, l'acide méthacrylique, l'acide citrique, l'acide oxalique et l'acide lactique.

6. Composition selon l'une quelconque des revendications 1 à 5, où le sel métallique d'acide carboxylique à insaturation α,β-éthylénique est constitué d'un sel d'acide acrylique, méthacrylique, crotonique, tiglique ou cinnamique ou de combinaisons de ceux-ci, et le métal est sélectionné parmi le groupe constitué du lithium, sodium, potassium, calcium, zinc, magnésium, baryum, béryllium, aluminium, titane, zirconium, fer, cuivre ou argent ou de combinaisons de ceux-ci.

7. Composition selon l'une quelconque des revendications 1 à 6, où il y a du diacrylate de zinc dans ledit sel métallique.

8. Composition selon l'une quelconque des revendications 1 à 7, où ladite composition est sous la forme d'une solution aqueuse qui comprend en outre de l'acide acétique.

9. Utilisation d'une composition selon l'une quelconque des revendications 1 à 8 pour le traitement d'un tissu afin d'amplifier l'adhésion à du caoutchouc.

10. Procédé de traitement d'un tissu pour amplifier l'adhésion à du caoutchouc comprenant l'application au tissu d'une composition selon l'une quelconque des revendications 1 à 8.

11. Procédé selon la revendication 10, où la composition adhésive est appliquée au tissu par pulvérisation, revêtement par immersion, extrusion ou enduction au rouleau.

12. Procédé selon la revendication 10 ou 11, où le tissu traité est traité thermiquement à une température allant jusqu'à environ 240°C.

13. Procédé selon l'une quelconque des revendications 10 à 12, où le tissu est constitué de polyester, polyamide, polyuréthane, coton, rayonne, soie, laine, nylon, polypropylène, fibre de verre, fibres de carbone, fibres métalliques ou de mélanges de ceux-ci.

14. Tissu traité avec une composition selon les revendications 1 à 8 ou selon le procédé selon l'une quelconque des revendications 10 à 13.

15. Article en caoutchouc renforcé, dans lequel le tissu traité selon la revendication 14 est laminé et moulé avec du caoutchouc, et durci.

16. Article en caoutchouc selon la revendication 15, où le caoutchouc est sélectionné parmi le groupe constitué de caoutchoucs naturels ou synthétiques, EPDM (caoutchouc d'éthylène propylène diène), EPM (caoutchouc d'éthylène propylène), BR (caoutchouc de butadiène), IR (caoutchouc d'isoprène), NBR (caoutchouc de nitrile), HNBR (caoutchouc de nitrile hydrogéné), SBR (caoutchouc de styrène butadiène), CR (caoutchouc de chloroprène), XIIR (caoutchouc d'halogénobutyle), UR (caoutchouc d'uréthane), et de mélanges et copolymères de ces matériaux.

17. Article en caoutchouc selon la revendication 15 ou 16, où le caoutchouc est durci par un initiateur de radicaux libres ou des agents durcisseurs soufrés.

18. Article en caoutchouc selon la revendication 17, où le caoutchouc est durci par un peroxyde.

19. Utilisation d'une composition selon l'une quelconque des revendications 1 à 8 dans la préparation d'articles en caoutchouc renforcé selon l'une quelconque des revendications 15 à 18 pour des applications d'usage final comprenant : des tuyaux et courroies automobiles, des courroies transporteuses, des courroies de transmission de puissance, des airbags automobiles, des toiles d'impression flexibles, des bâtis moteurs, des pneus et tout autre produit en caoutchouc moulé renforcé.

20. Utilisation d'une composition selon l'une quelconque des revendications 1 à 8 dans le traitement de renforcements en fibres de verre ou fibres de carbone pour améliorer les propriétés de structures composites.

21. Utilisation d'une composition selon l'une quelconque des revendications 1 à 8 en tant qu'adhésif pour coller des substrats sélectionnés parmi le métal, le plastique, le bois, le papier, le verre ou des tissus à eux-mêmes ou d'autres matériaux.

22. Utilisation d'une composition selon l'une quelconque des revendications 1 à 8 en tant qu'agents dispersants de charges dans des élastomères ou en tant que revêtements pour métaux, plastiques, verre, bois, papier ou autres substrats.

23. Agent dispersant pour des charges dans des élastomères, comprenant au moins une composition selon l'une quelconque des revendications 1 à 8.
